(19) Europäisches Patentamt
European Patent Office
Office européen des brevets

(11) **EP 3 113 423 A1**

(12) **EUROPEAN PATENT APPLICATION**

(43) Date of publication:
**04.01.2017 Bulletin 2017/01**

(51) Int Cl.:
*H04L 12/733* (2013.01)          *H04L 12/721* (2013.01)

(21) Application number: **15290171.6**

(22) Date of filing: **01.07.2015**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**MA** | (71) Applicant: **ALCATEL LUCENT**<br>**92100 Boulogne-Billancourt (FR)**<br><br>(72) Inventor: **Papadimitriou, Dimitri**<br>**2018 Antwerpen (BE)**<br><br>(74) Representative: **Plas, Axel Ivo Michel**<br>**IP HILLS NV**<br>**Hubert Frère-Orbanlaan 329**<br>**9000 Gent (BE)** |

(54) **DATA OBJECT AND NETWORKING NODE LOCATORS**

(57) According to embodiments, the disclosure relates to a networking node for exchanging messages in a communication network. The networking node comprises a message exchange module configured to exchange these messages based on object locators of objects within this communication network. An object locator further comprises geometric coordinates of a respective object in a negatively curved hyperbolic space and a distance between objects in this negatively curved hyperbolic space relate to a travel time of messages exchanged between these objects.

Fig. 2

**Description**

**Technical Field**

The present disclosure generally relates to computer networking. More particularly it relates to the locating of objects within a computer network, wherein an object may relate to a networking node or to a data object residing on such a networking node. It further relates to the routing and exchanging of messages between networking nodes in the communication network.

**Background**

Nowadays the Internet Protocol or IP networking layer, for example IPv4 or IPv6, is based on a distinct localization and routing function. For the localization, a name of a networking node service or resource is translated into an object locator, in this case an IP address. Typically, this process, referred to as name resolution, is performed by a Domain Name System or DNS query to a name server. A DNS name server is a server that stores the DNS records for a domain name and responds with answers in the form of an IP address to queries against its database. The obtained IP address then uniquely defines the location of the networking node in the computer network, e.g., in the internet or in a local area network.

The routing function then provides the route to the location identified by the IP address where a route provides at least an indirection to the outgoing interface that the incoming message has to follow in order to reach its destination. In order to obtain the route, routing tables stored in intermediate networking nodes are used. This renders the routing function stateful where a state corresponds to the information stored locally for the networking node or router in order to take its routing decision. The routing information is however not derivable from local knowledge. Routes must thus be constructed from remote information that is obtained or learned by polling in order to relate the location as identified by the IP address to the route defining how to get to the IP address.

More generally, the name of a resource or object indicates what is sought, an address or object locator indicates where it is. Following this distinction, two generic models, i.e., the overlay model and the name-based routing model, can be identified as the main principle of most currently proposed approaches to stateful message exchange systems.

The overlay model introduces another level of indirection or overlay by extending the IP address semantic and including a location name from where the information can be retrieved

The name-based routing model performs routing based on object names performing independently from the IP addresses which contains network locator semantic. Such a scheme is for example proposed by T.Koponen et all in "A data-oriented (and beyond) network architecture" published in the Proc. of 2007 Conference on Applications, Technologies, Architectures, and Protocols for Computer Communications, ACM SIGCOMM, pp.181-192, New York, NY, USA and by V.Jacobson, D.K.Smetters, J.D.Thornton, M.F.Plass, N.H.Briggs, and R.L.Braynard in "Networking named content", Proceedings of CoNEXT, 2009. The notion of name-based routing predates these publications but these reflect the latest trial to overcome the limits of IP networking enabling data to become independent from their network location, application, storage support but also means of content exchanges enabling in turn in-network caching and replication.

The publication *"Efficient Navigation in Scale-Free Networks Embedded in Hyperbolic Metric Spaces"* by D.Krioukov et al. published in May 2008 shows that complex scale-free network topologies naturally emerge from hyperbolic metric spaces. This observation lead to the inception of *"Greedy forwarding in dynamic scale-free networks embedded in hyperbolic metric spaces"* by F.Papadopoulos et al., published in Proc. of 29th IEEE Conference on Computer Communications (INFOCOM), pp.1-9, 2010 from the demonstration of the probabilistic congruence of the network topology with an underlying or hidden space presenting properties of a negatively curved space. The methods proposed in these publications rely on the construction of a virtual map obtained by applying empirical rules derived from the properties of the hidden - instead of observable -- hyperbolic space underlying the observable Internet topology. The proposed methods rely on the self-similarity of clustering in real complex networks such as the Internet derived from empirical evidence that hidden metric spaces underlie the observable topology of these networks. Coordinates are built from the knowledge of the statistical properties of this underlying space.

Summary

A disadvantage of the overlay model is that is leads to unnecessary inefficiency as it operates independently of any knowledge about the structure and behaviour of the underlying network topology/routing level. The overlay model complies with the classical internet evolution model where a host identifier space is inserted in between existing object names and network locators. The decoupling resulting from the additional level of indirection between content names and network locators is particularly detrimental when a single organization owns both levels as information distribution acts independently of the underlying routing topology. When such distinction is made between host identifiers and network locators, the former IP addresses are often assigned independently of the topology which in turn prevents renumbering in case of multi-homing which accounts to about 25% of the sites connected to the Internet. This model thus exacerbates the problem generated by Provider Independent or PI addresses that are not topologically aggregatable, i.e., they are allocated independently of the topology. This in in turn makes Classless Inter-Domain Routing or CIDR ineffective in handling address scaling. Routing on PI addresses implies to store and process non-aggregatable routing table entries in the internet routing system. On the other hand, the cost incurred by these additional routing entries in terms of memory space and processing capacity is directly supported by the global routing system rather than the owner of these addresses. Assume for instance that a Provider Independent IP address would be allocated to each content name domain, which is the coarsest level of granularity one can reasonably expect, the number of active routing entries would increase from about $5.10^5$ to $2.5\ 10^8$. Moreover, the resulting increase in the routing table size in terms of number of entries and associated processing would worsen over time as the number of domains also increases from 10 to 15% per year. In summary, all elements are currently available to build the overlay model. However, the increase in router's memory and processing cost required to store and process PI entries and inefficient network resource usage in content exchange currently outweigh the potential gain.

The name based routing model suffers from limited scaling in terms of memory space, in particular the memory space required to store the routing entries in local table. This is because name spaces have not been designed to sustain routing performance and scaling. Receiver-driven schemes such as Content Centric Networking or CCN as proposed e.g. in the publication by T.Koponen et al. and the publication by V.Jacobson et al., are confronted with object name spaces that have not been designed to sustain forwarding performance and scaling. Since the information to retrieve the objects from the network has to be maintained in routing tables confer stateful routing, with one entry per top-level domain, name-based routing tables would exponentially increase making it practically unfeasible. Furthermore, the adoption of a new content name space is challenging and the maintenance of a hierarchical tree-based structure to reduce storage space and search time is even more challenging. Consequently, if names become the fundamental structure of the information exchange process, name-based routing leads to a serious scaling and performance bottleneck both in terms of memory and search time. Therefore, the resolution of a name, in particular a data object name, into an address cannot be avoided when using the name based routing model.

A disadvantage of the systems proposed by F.Papadopoulos et al D.Krioukov et al. is that the routing follows coordinates derived out of a hidden space but the routing paths do not reflect observable routing distances. As a result, localization and routing functions can only perform independently. Therefore, the derived routing paths do not reflect optimal paths and, moreover, an optimal routing path is even not guaranteed Moreover, the solution relies on the construction of a hyperbolic space using a probabilistic model from where coordinates are computed and subsequent routing computation and decisions taken. Hence, all performance metrics being it routing path stretch or success rate are also probabilistic. Consequently, the success rate is even not guaranteed to reach 100%. Summarized, the above proposed scheme is i) stateless besides the maintenance of neighbour tables, ii) probabilistic and iii) oblivious because routing states are kept unchanged and decisions invariant as long as the resulting success rate doesn't degrade below a certain threshold.

It is an object of the present disclosure to overcome the above shortcomings and provide a solution for locating and routing objects within a communication network.

According to a first aspect, this object is achieved by a networking node for exchanging messages in a communication network. The networking node comprises a message exchange module configured to exchange these messages based on object locators of objects within this communication network. An object locator further comprises geometric coordinates of a respective object in a negatively curved hyperbolic space and a distance between objects in this negatively curved hyperbolic space relate to a travel time of messages exchanged between these objects.

The networking node thus operates in a communication network by exchanging messages with other networking nodes. In order to locate an object in the communication network, each object is locatable by an object locator. An object may for example relate to a data object such as for example a file, a web page or any part thereof or more generally any digitally encoded object. An object may also relate to a networking node in the communication network which, on its turn, may exchange messages or serve data objects. By the object locator, an object is mapped in a hidden geometric space as defined by its geometric coordinates. This mapping is defined by the interrelation of objects in the communication network, more specifically by the physical property of time for messages to be exchanged.

The advantage is that, the negatively curved hyperbolic space provides a good representation of the network topology. More specifically, when the mapping is performed in the claimed way, the hyperbolic metric space is quasi-geodesic meaning that the distance function can be used to obtain the closest paths between different networking nodes. In other words, there is a direct relation between the object locators and the physical distance in time between the corresponding objects. Therefore, the routing can be directly derived from the object locators by calculating distances from the coordinates embodied by the object locators. In particular, knowing its own coordinate, a receiver of a message can compute the distance from itself to the object that sent the message by computing the distance between the respective coordinates. Moreover, the proposed operates in a statistic way instead of a probabilistic way as it relies on delay measurements between nodes.

The travel time may for example correspond to the Round Trip Time or RTT.

According to an embodiment, the message exchange module further comprises:

- a locator retrieval module configured to receive a request for a data object; and to request and retrieve object locators for this data object;
- a localization module configured to calculate distances in the negatively curved hyperbolic space between a geometric coordinate of said networking node and geometric coordinates of the retrieved object locators; and
- a decision module configured to select a selected data object locator from the retrieved object locators based on the distances; and to retrieve the data object from a server node in the communication network by the selected data object locator.

According to the embodiment the networking node thus operates as a client node, i.e., it retrieves data from server nodes in the communication network. The client node receives from the networking node a list of possible locations where the data is available by receiving the object locators of the data. These locations may for example comprise a root server and one or more cache servers. By calculating the distances between the client node and the object locators of the data, the client node gets a measure of the time needed to retrieve the data by each of the object locators. Moreover, the calculated distance is an indication of the time it will take to fetch the data object along the geodesic in the hyperbolic space, i.e., along the shortest path.

It is thus an advantage that a client node can derive routing information solely from local data, i.e., from the object locators themselves. The decision module may then choose to retrieve the data for which the distance to the client node is the shortest. The retrieval of the data object may then be performed by issuing a request message with the selected data object locator as destination location of the message and with the object locator of the client networking node as source location. It is a further advantage that the overall performance in terms of retrieval time is independent from the existence of cache functionality provided by intermediate routers or nodes.

According to an embodiment, the message exchange module further comprises:

- a routing table comprising entries pointing to coordinate sets indicative for logical partitions of the negatively curved hyperbolic metric space; and wherein the entries relate to quasi-geodesic and geodesic segments in the hyperbolic metric space; and wherein lengths of the segments correspond to the distances in the hyperbolic metric space;
- a routing module for calculating routing paths from these entries and for routing incoming messages to neighbouring networking nodes according to these routing paths.

Pointing refers to pointing to the locally stored information required for incoming messages to find the outgoing interface to reach the respective coordinate set. According to this embodiment, the quasi-geodesic properties of the negatively curved hyperbolic space it exploited to use the networking node as a routing node in the communication network, i.e., to propagate incoming messages towards a neighbouring node according to an optimal path. As the object locator of networking nodes and data objects are related to coordinates in the hyperbolic space, a message arriving at the routing networking node can be routed directly based on a destination object locator specified in the message. It suffices to select the logical partition within which the destination coordinates are located and to propagate the message to the neighbouring networking node providing a shortest path to this logical partition. These partitions, for example identified by their extreme points, allow summarizing a complete portion of the space without requiring enumeration of all elements belonging to this portion of the space. All of this leads to a stateful routing system instead of a stateless system as it involves aggregated states for destinations reachable indirectly via nodes sitting in a close neighbourhood.

As the hyperbolic metric space is quasi-geodesic, quasi-geodesic routing paths can be determined and, therefore, it is an advantage that a shortest route can always be determined based on the distances in the hyperbolic metric space.

Advantageously, the information required to compute routing paths are comprised within the limits of k-local geodesics.

In other words, routing information is only exchanged within a positive integer number k of hops from the networking node. Within the hyperbolic metric space the k-local geodesics actually correspond to quasi-geodesic segments. It is thus an advantage that the use of the k-local geodesics in the routing table always leads the an enumeration of quasi-geodesic segments and, thus, of a set of shortest routing paths. Furthermore, by limiting the paths locally, a trade-off can be made between the size of routing table and the derivation of the most optimal routing path which corresponds to the geodesic path. This further leads to an adaptive and cost-effective routing system as it reacts by re-executing and/or adapting routing decisions in a timely and cost-effective manner when internal or external events occur that affects the value delivery.

The routing module may be further adapted to receive updates on said segment lengths from neighbouring networking nodes and to update said routing table accordingly.

In order to maintain the routing table such that it reflects the changing conditions in the communication network, the networking node exchanges information with its neighbouring nodes. This information comprises the lengths of the segments, i.e., the distance in the hyperbolic metric space between neighbouring nodes and, thus, a travel time of messages exchanged between the neighbouring nodes.

Advantageously, the routing module is further adapted to propagate the updates within a predetermined number k of hops from a source networking node that initiated the updates.

This way, the networking node as well as the other networking nodes have information on the segment lengths of neighbouring nodes within a range of k hops. This way, it is assured that the networking node has all necessary information to update its routing table and to calculate the routing paths comprised within the limits of k-local geodesics

According to an embodiment, the message exchange module of the networking node further comprises:

- an object locator determining module configured to determine an object locator of an object in the communication network by deriving geometric coordinates of the object in the negatively curved hyperbolic space from travel times of messages exchanged between the object and neighbouring networking nodes.

This module thus determines the object locator of the networking node. This operation is realized by converting the distance between the networking node and neighbouring networking nodes into the geometric coordinates of the networking node in the hyperbolic metric space. In order to obtain the distances, messages are exchanged between the networking nodes wherein the distance information is specified. The neighbouring networking nodes thus collaborate in order to obtain the distance information.

According to a further embodiment, the object locator determining module is further configured to:

- update a geometric coordinate of said networking node by using:

    o a received geometric coordinate of a 1-hop neighbouring networking node;
    o a received travel time to this 1-hop neighbouring networking nodes;
    o a received relative error in the received geometric coordinate of the 1-hop neighbouring networking node;

- or, when the received geometric coordinate of said 1-hop neighbouring networking node is zero, update the geometric coordinate of the networking node by using:

    o a received geometric coordinate of a farther neighbouring networking node reachable by the 1-hop neighbouring networking node;
    o a received travel time to the farther neighbouring networking node;
    o a received relative error in the geometric coordinate of the farther neighbouring networking node;

- repeat the updating for all 1-hop neighbouring networking nodes.

In other words, the knowledge that can be gained out of the geometric properties of the observable topology of the communication network that is characterized by a negative curvature $\kappa$ yields to the above coordinate computation algorithm. It is an advantage that this algorithm is of a similar computational complexity than a corresponding canonical Vivaldi algorithm which is based on Euclidean distances when compared to the approach that would combine estimation of distance and curvature. Thus, instead of assigning coordinates and computing distances based on them, the above algorithm derives the distances between vertices from the received length, i.e., the travel times, of the corresponding geodesic drawn out of hyperbolic space and from remote coordinates derived from the selective processing and exchange of geodesics routing information, i.e., location information. This procedure leads to a major demarcation compared to the usual geometric routing where the routing topology follows the addressing space build upon global/network-wide structures. In the present case, the name space follows the topology; thus, preserving the fundamental Internet principle that the routing topology is not predetermined by the addressing space and its allocation.

According to a second aspect, the disclosure relates to a method for exchanging messages in a communication network comprising;

- exchanging the messages based on object locators of objects within the communication network; and wherein an object locator comprises geometric coordinates of a respective object in a negatively curved hyperbolic space; and wherein a distance between objects in said negatively curved hyperbolic space relate to a travel time of messages exchanged between the objects.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

## Brief Description of the Drawings

Fig. 1 illustrates a exemplary topology graph of a communication network; and

Fig. 2 illustrates a networking node according to an embodiment of the invention; and

Fig. 3 illustrates a steps performed by a networking node in order to obtain a data object according to an embodiment of the invention; and

Fig. 4 illustrates steps of an iterative algorithm for determining an object locator of an networking node according to an embodiment of the invention; and

Fig. 5 illustrates a suitable computing system as a further embodiment of a networking node according to embodiments of the invention.

## Detailed Description of Embodiment(s)

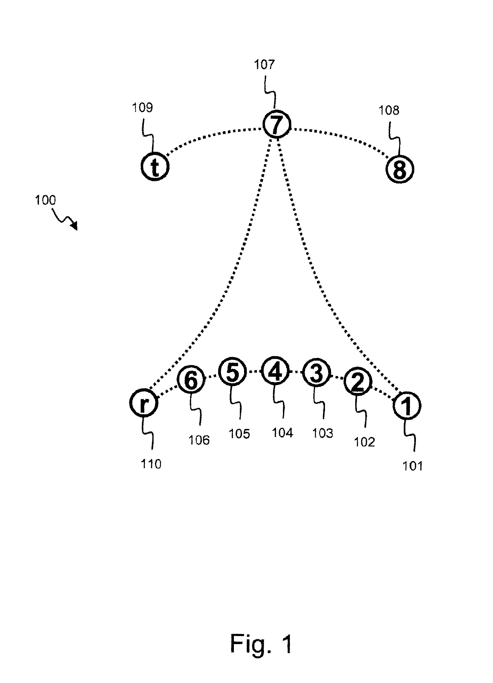

According to embodiments of the present invention a locating and routing scheme is provided for exchanging messages between networking nodes within a communication network having a certain network topology. In Fig. 1, an example of a communication network is represented by a graph 100 and will be used as an example throughout the disclosure below. The network comprises networking nodes 100 till 110 wherein networking node 110 is a client node and networking node 101 is a server node. The server node 101 serves data objects to client nodes 110. Data objects may for example be data files that are treated as a unity of information within a communication layer of a communication stack in a networking node. Data objects may further be available from other networking nodes that serve as caching nodes, i.e., nodes that store temporarily a copy of the original object. In general, caching defines a memory usage method by which the data retrieval time is decreased.

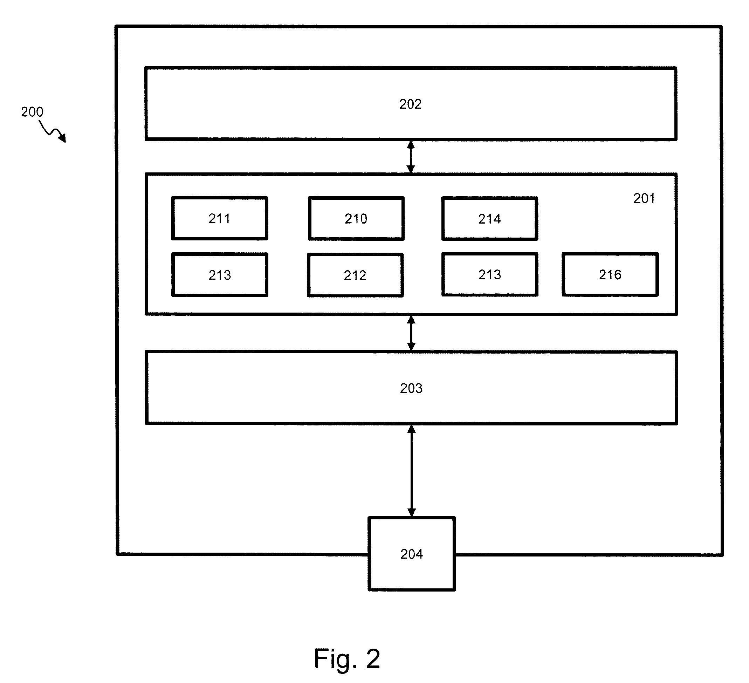

Fig. 2 illustrates a networking node 200 according to an embodiment of the invention. The node 200 comprises a message exchange module 201 in order to establish network communication between applications on different networking nodes. This communication is established by exchanging messages with the message exchange modules of other networking nodes in the communication network.

In order to specify the location of other networking nodes or of data objects within the communication network, the messages communicated by the message exchange module 201 comprise an object locator of the respective other networking nodes or data objects. The messages may further comprise an object locator of the networking node from which the message originates. This is analogy with existing message exchange protocols as for example the TCP/IP networking protocol or the IEEE 802.11 MAC protocol.

Logically, the message exchange module 201 may be situated beneath an application layer 202. The application layer 202 then provides an interface to applications on the networking node 200 to exchange information with other networking nodes in the communication network 100.

On its turn, the message exchange module may be situated on top of a physical layer module 203 providing a way to the transport the message over a physical medium by a wired or wireless interface 204.

### Definitions

In order to describe the further internal working or the message exchange module 201, this sections explains and defines some terminology and terms from graph theory.

A network topology as illustrated by Fig. 1 can be modelled by an undirected weighted graph: G = ($V$, $E$, $\omega$) where, the set $V$, $|V|X$ = n, represents the finite set of nodes or vertices, the set $E$, $|E|$ = m, represents the finite set of links or edges between the nodes, and $\omega$ is a non-negative function $\omega$: $E \rightarrow \mathbb{R}^+$ which associates a non-negative

weight or cost $\omega(u, v)$ to each edge $(u, v) \in E$.

For $u, v \in G$, the path $p(u, v)$ from $u$ to $v$ is defined as the sequence $[x_0(= u), x_1, \dots, x_{i-1}, x_i, \dots, x_p (= v)]$ such that the vertices $x_i$ are all distinct and vertex $x_{i-1}$ is adjacent to $x_i$, $\forall (x_{i-1}, x_i)_{i=1,\dots,p} \in E$. The length $\ell(u, v)$ of a path $p(u, v)$ is defined as the sum (of the weights) of the edges along the path from $u$ to $v$. The distance $d(u, v)$ between two vertices $u, v$ of the graph G denotes the shortest path $p(u, v)$ from $u$ to $v$. The diameter $\delta(G)$ of the graph G is defined as the largest distance between any two vertices $u, v \in V$, i.e., $\delta(G) = max_{u,v \in V}\{d(u, v)\}$.

Let $X$ be a set and $d$ the positive define metric or distance function defined as $d$: $X \times X \to \mathbb{R}$ such that $\forall x, y, z \in X, d(x, y) = d(y, x) > 0$ when $x \neq y$ otherwise $d(x,y) = d(y, x) = 0)$ and $d(x,z) \leq d(x, y) + d(y, z)$, the tuple $(X, d)$ defines a metric space. The metric space $(X, d)$ is said geodesic if every pair of *points x, y* $\in X$ can be joined by a continuous path of length $d(x,y)$ a.k.a. geodesic path, where $d(x,y)$ denotes the largest lower bound of the length of all curves joining $x$ and $y$.

A geodesic path joining $x$ to $y$ is then a continuous map $\gamma$ (piecewise curve from $x$ to $y$) from a closed interval $[0, \ell] \in \mathbb{R} \to X$ such that $\gamma(0) = x, \gamma(\ell) = y$ and $d(\gamma(s), \gamma(t)) = |s - t|$, $\forall s, t \in [0, \ell]$. In particular, $\ell \stackrel{\text{def}}{=} d(\gamma(0), \gamma(\ell)) = d(x,y)$. The image of such path is called a geodesic segment with endpoints $x$ and $y$.

In a geodesic metric space $(X,d)$, an (l,e)-quasi-geodesic is as an (l,e)-quasi-isometric map $\gamma$ from the closed segment $[a, b] \in \mathbb{R} \to X$ if there exist constants $\lambda \geq 1$ and $\varepsilon \geq 0$ such that $\forall s,t \in [a,b]$, $\lambda^{-1}|s-t|-\varepsilon \leq d(\gamma(s), \gamma(t)) \leq \lambda^{-1}|s - t| + \varepsilon$. In a hyperbolic metric spaces such as $H^2$, quasi-geodesics closely follow geodesics.

Object locators

In order to locate data objects and networking nodes within the communication network 100, the message exchange module 201 uses object locators. These object locators are both used to identify and locate objects within the communication network 100. To uniquely identify any object, an object locator is represented by a set of geometric coordinates of the object. These coordinates represent the position of the object in a negatively curved hyperbolic space. This hyperbolic represents the topology of the communication network, but not in terms of Euclidean distances. The mapping between the communication network and the hyperbolic space is done by the physical property of travel time, i.e., a distance between coordinates of objects in this hyperbolic metric space represents the time that it takes for messages to travel between these respective object. An example of such a property of travel time is the Round Trip Time or RTT defined as the time it takes for a message to travel back and forth between networking nodes.

For the representation of the geometric coordinates, the values of the coordinates may be represented by a 2-dimensional unit hyperboloid of curvature $\kappa$, also known as the Minkowski model or the Lorentz model. In this case, the distance between two points and thus coordinates $x = (x_1, x_2)$ and $y = (y_1, y_2)$ is given by the following formula:

$$d_H(x,y) = \text{arccosh}\left(\sqrt{(1 + \sum_{i=1}^{2} x_i^2) + (1 + \sum_{i=1}^{2} y_i^2)} - \sum_{i=1}^{2} x_i y_i\right) \kappa \quad (\text{Eq. 1})$$

A hyperbolic metric space is further defined by its curvature $\kappa$ or by its $\delta$-hyperbolic property. The $\delta$-hyperbolic property of a hyperbolic space of curvature $\kappa < 0$ is given by the relationship $\delta = ln(1 + \sqrt{2})/\sqrt{-\kappa}$. i.e., the smaller the $\delta$-hyperbolic property, the "more hyperbolic" the space. Intuitively, the $\delta$-hyperbolic property measures the deviation of the graph from tree-likeness which is obtained when $\delta = 0$ and which corresponds to a curvature $\kappa = -\infty$. Empirical tests have shown that this value ranges between 2 and 2.5 which provides a trade-off between "tree-likeness", which is optimal in terms memory space, "near-optimal paths" and thus resilience and "shortcuts".

Determining object locators

According to an embodiment, message exchange module 201 comprises an object locator determining module 210 in order to determine an object locator for the networking node 200 and in order to collaborate on determining object locators for neighbouring networking nodes. A neighbouring networking node should be understood as networking nodes within a predetermined amount of hops from the networking node 200. In order to determine the object locator, the networking node needs distance information with regards to its neighbouring nodes, i.e., it needs to know the travel times for messages exchanged with its neighbouring nodes. In order to acquire this information, object locator determining module 210 is configured to send messages to neighbouring nodes within a specified number k of hops and to receive the back the times that it took the message to travel to the respective neighbouring node.

According to a further embodiment of the invention, the object locator and thus coordinates of the networking node 200 is then determined by the object locator determining module 210 by using a variant of the Vivaldi algorithm where the algorithm is performed in the hyperbolic space instead of the Euclidean space. This Vivaldi algorithm was initially disclosed by Frank Dabek, Russ Cox, Frans Kaashoek, Robert Morris, in "Vivaldi: A Decentralized Network Coordinate System", ACM SIGCOMM'04, Aug. 30-Sept. 3, 2004, Portland, Oregon, USA. The computation of the individual vertex coordinates from the subset pair of distances between vertices, is performed by minimizing the symmetric distortion of these pairs. It is also assumes that nodes may store information corresponding to the decreasing computation convergence time and/or increasing accuracy. Selection of this information can either be based on spatial, e.g., distance in number of hops, or temporal criteria.

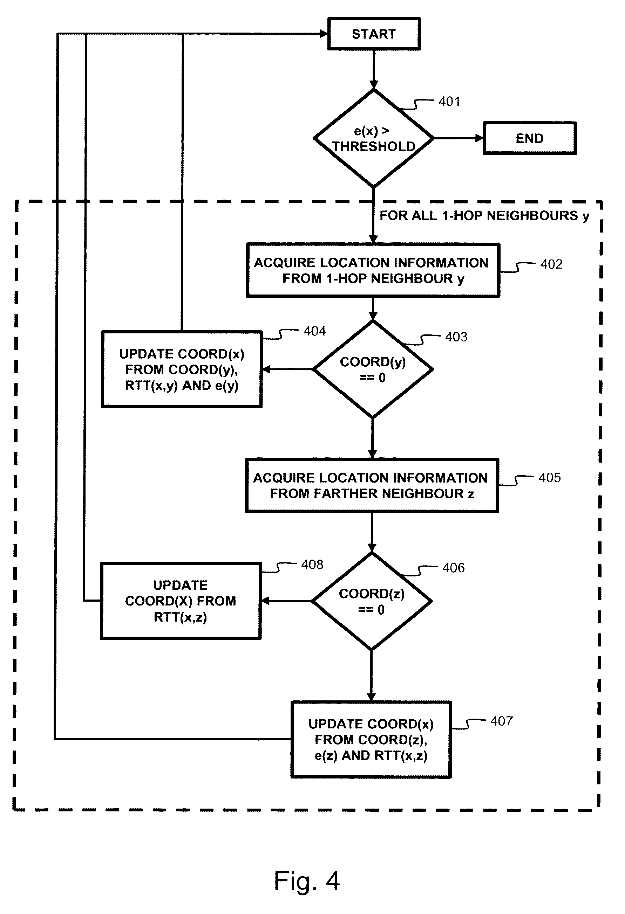

Fig. 4 shows the steps performed by the object locator determining module 210 as an algorithm for to determine or update its object locator. The steps can be triggered when the node 200 has not been assigned an object locator yet or when the node 200 establishes that an error bigger than a predetermined threshold is present in the current object locator. In the case the node 200 has not yet been assigned an object locator, it is initialized in the origin of the two dimensional hyperbolic metric space:

$$COORD(x) = (0,0)$$

where x is the node 200 and COORD() stands for the coordinates of the vector in its argument, i.e., of x and thus of node 200.

In the step 401 it is first verified whether the absolute or relative error e(x) on COORD(x) is larger than a predefined threshold value. If not, the algorithm ends and the object locator of node 200 is no longer updated. As the algorithm is iterative, step 401 is also the last step. The absolute or relative error e(x) on COORD(x) may be determined in steps during a previous iteration of the algorithm or may be determined beforehand. For example, node 200 may receive distance values from other nodes during operation by which it can update its error and thus decide to start updating its object locator.

Then in step 402, the object locator determining module 210 acquires location information from its direct neighbouring nodes, i.e., from its 1-hop neighbours. This location information comprises the distance to the neighbouring node, the coordinates of the neighbouring node y represented as COORD(y) and the absolute or relative error e(y) as computed by the neighbouring node y. Step 402 may further be performed as follows:

1. Node x sends a loopback probe message to the one hop neighbouring node y and specifies the time at which the message was transmitted.
2. Node y receives the loop back probe message.
3. Node y may first re-estimate its error e(y) as it has now an updated distance value for the distance between x and y.
4. Node y sends back a message to x comprising:

   a. its coordinates COORD(y);
   b. its estimated error e(y) on COORD(y);
   c. a RECEIVE_TIME value which is the time at which the message from node x was received;
   d. a SEND_TIME value which is the time at which the return message was transmitted.

Then node 200 proceeds to step 403 and verifies whether the coordinates COORD(y) received from node y are different from zero. If not, the object locator COORD(x) is updated in step 404 by using the received location information:

1. At node x, the estimated absolute error in the coordinate of node x, e(x) is calculated/updated following the formula $e(x) \sim |RTT(x,y) - d(x,y)|$ where the sign "~" indicates a proportionality. This error is referred to as absolute in comparison to the relative error defined as $|RTT(x,y) - d(x,y)| / RTT$. More elaborated error estimates may also be used such as the Root-Mean-Square Error or RMSE.
2. The normalized absolute error e(x,y) is calculated or updated using the formula $e(x,y) \sim e(x)/(e(x) + e(y))$
3. The error e(x,y) is then compared with the error obtained during or averaged over previous measurement time intervals with respect to the same node y.
4. If the error has become larger, COORD(x) remains the same
5. Otherwise COORD(x) is updated as follows:

$$COORD(x) \leftarrow COORD(x) + e(x,y) \cdot |RTT(x,y) - d(x,y)| \cdot u(x-y)$$

where:

RTT(x,y) is the round trip time between node x and y
d(x,y) is the distance between node x and y obtained from Eq.1
u(x-y) is a unit vector

When the coordinates provided by the neighbouring node y are zero, the algorithm proceeds to step 405. In step 405, the same procedure is followed as in step 402, but the location information is acquired from a neighbouring node z which is further than 1 hop away from networking node x. This may be done as follows:

1. Acquire location information from a node z that is more than one hop away from x , passes node y and that is no more than a predefined number of hops MAX_HOP away from node x.
2. Keep repeating step 1 as long COORD(z) is zero and as long as location information can be acquired within the MAX_HOP range from x. If one of the conditions is no longer fulfilled, then proceed.

At that moment, there are two possibilities. Either there was no node within the MAX_HOP range and thus the acquired coordinates of the last node z were also zero, either a node z was found which had coordinates different from zero. This condition is tested in step 406. In the first case, the coordinates of node x are updated in step 407 in a similar way as in step 404:

1. At node x, the estimated absolute error in the coordinate of node x, e(x) is calculated/updated following the formula e(x) ~ |RTT(x,z) ~ d(x,z)| where the sign "~" indicates a proportionality
2. The normalized absolute error e(x,z) is calculated or updated using the formula e(x,z) ~ e(x)/(e(x) + e(z)).
3. The error e(x,z) is then compared with the error obtained during or averaged over previous measurement time intervals (to the same node z).
4. If the error has become larger, COORD(x) remains the same
5. Otherwise COORD(x) is updated:

$$COORD(x) \leftarrow COORD(x) + e(x,z) \cdot |RTT(x,z) - d(x,z)| \cdot u(x-z)$$

where:

RTT(x,z) is the round trip time between node x and z
d(x,z) is the distance between node x and z obtained from Eq.1
u(x-z) is a unit vector from x to z

In the other case, there is no location information available from a node with coordinates different than zero. Therefore the coordinates of node x are updated by using the Round Trip Time between node x and z:

$$COORD(x) \leftarrow COORD(x) + c \cdot RTT(x,z) \cdot u(x-z)$$

where:

c is a parameter selected from the interval [e(x), 1]. The selection of c allows tuning the algorithm between precision and convergence speed.

When the appropriate steps from steps 402 to 408 have been performed for all 1-hop neighbouring nodes y or for farther neighbouring nodes y when necessary, the algorithm proceeds back to step 401 where the updated relative error e(x) is again compared with the threshold. When the normalized absolute error drops below the threshold, convergence has been reached and the node 200 is assigned with the latest value of COORD(x) as object locator.
According to the above embodiment, the algorithm is performed from the local to the remote nodes, i.e., starting from the nodes in the closest neighbourhood. Alternatively, the algorithm may also be performed by polling directly nodes being more than one-hop away from the querying node, for example by using the MAX_HOP range which allows to poll more distant nodes first. Such an approach may be advantageous by improving convergence. In particular if the most distant nodes can be identified as this would lead to the highest precision in the coordinate computation.

According to the above embodiment, the algorithm is completely distributed and the decision process decentralized. Whereas measurement are by definition "distributed", the decision and/or computational process may also be completely or partially centralized by collecting measurement information at a repository and communicate subsequent decisions, for example the computed coordinates, to the distributed nodes.

Obtaining data objects

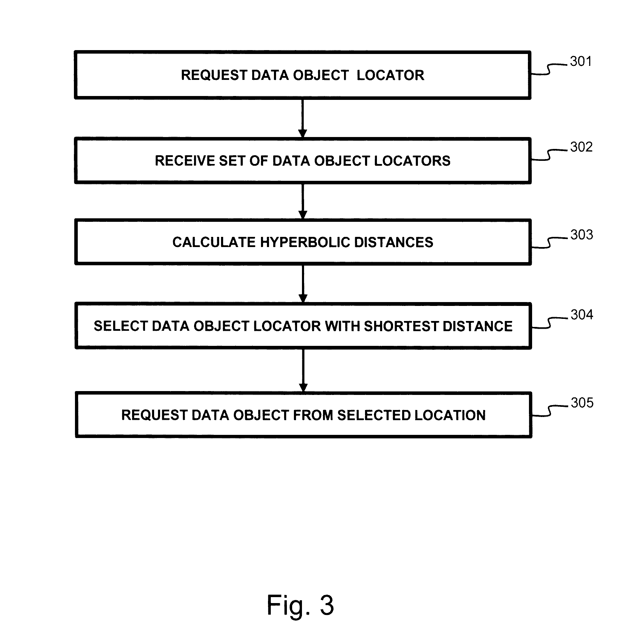

According to an embodiment, the message exchange module 201 further comprises a locator retrieval module 211, a localization module 212 and decision module 213. These modules are used to retrieve a data object from a server node within the communication network. Fig. 3 illustrates steps performed by these modules 211 to 213 in order to retrieve such a data object.

In a first step 301, the location retrieval module 211 issues a request over the network interface 204 for object locators locating a certain data object. This request may for example originate from the upper application layers 202 where the data object is requested for by one or more attributes identifying this data object. Such attribute may for example be a Uniform Resource Locator or URL, a qualitative and/or quantitative qualifier. The request may for example be addressed to a known networking node in the communication network running a name service associating data object attributes such as for example name to their respective object locator or set of object locators.

Then, in step 302, the location retrieval module receives a set of object locators $y_i$ specifying the location of the data object within the communication network. These object locators are represented by coordinates of the data object in the hyperbolic metric space as described before. As a set of object locators is received, this means that the data object may be available at different locations within the communication network. Referring back to the network topology of Fig. 1, a data object requested by client node 110 may for example be available in both the server node 101 and the cache server node 104.

In step 303, the localization module 212 then calculates the hyperbolic distance between the client node and each of the locations of the data object. This computation may be performed by applying the formula from Eq. 1 were the first set of coordinates is the object locator of the client node 200 and the second set of coordinates is the object locator of the respective data object as received in step 302. The obtained values are thus a direct measure of the physical distance and thus the travel time between the client node 200 and the data object within the network.

Therefore, in step 304, the decision module 213 selects the data object locator within the shortest hyperbolic distance from the client node 200.

Referring back to the example of Fig. 1, the hyperbolic distance between client node 110 and server node 101 may for example be longer than the distance between client node 110 and the cache server node 104 although the canonical graph distance to the server node, i.e., the number of hops between client and server, is shorter.

In the last step 305, the decision module 213 then issues a request for the data object by specifying the selected object locator as the destination address.

The localization module may also be used for other cases where the distance between objects identified by object locators is to be known. For example, when a message is received by the networking node 200 having an object locator $y_j$, the locator retrieval module calculates the distance $d(y_j, x)$ between the coordinate associated to the source x, i.e., the object locator of the source as retrieved from the header of the message, and the destination $y_j$.

Routing

According to an embodiment, the message exchange module 201 of a networking node 200 may further comprise a routing module 215 and routing table 214. In these modules, the intrinsic properties of the network that is mapped to the hyperbolic space are further exploited for the routing of message throughout the communication network. The routing module 215 routes messages within the network according to the shortest hyperbolic distance, i.e., according to geodesics in the hyperbolic space. This way, the distance values obtained by the localization module 212 corresponds to the length of the routing path along which the message is routed in the communication network.

It is thus important to ensure 100% success rate wherein the success rate corresponds to the percentage of messages that reach their destination following routing decisions. Therefore, it must be ensured that a routing path exists between a requesting networking node and a destination networking node and that such routing path corresponds to the closest distance properties where the distance relates to the distance as defined by Eq. 1. Routing table 214 is therefore populated with entries pointing to coordinate sets indicative for logical partitions of the negatively curved hyperbolic metric space. These logical partitions thus describe areas of the communication network, but not based on geographical locations, but by the distance metric in the hyperbolic metric space. These logical partitions may further be partially overlapping. Logical partitions of the hyperbolic space may further refer to the segmentation of the space in regions which can be delimited by the extreme points of a polyhedron delimiting it. This technique offers the mean to summarize a complete portion of the space and thus its coordinate system without requiring enumeration of all elements belonging to this portion of the space.

For this purpose, each vertex or networking node $u \in V(G)$ may maintain a vector $d_u = [\{d_G(u,v), d_H(u,u) = \ell(u,v)\}, \forall \, v \in V \, | d_G(u,v) \leq \kappa]$ from itself to all other nodes $v \in V(G)$ that are reachable within $k$ networking nodes ($d_G(u, v) \leq k$ and wherein $d_G$ denotes the canonical graph distance metric in vertex units). By defining the routing table 214 in this way, the admissible set of possible routing paths is extended beyond the minimal set of optimal paths, i.e., beyond the set of geodesic paths. The routing table 214 thus also comprises the subset of discoverable near-optimal paths of which the image is also referred to as the quasi-geodesic segments.

The routing module 215 may then calculate routing paths for incoming messages that are to be propagated further towards their destination by exploiting the intrinsic distance property embedded in the object locator of the destination. This operation may for instance be realized by routing an incoming message to a neighbouring node where it is derived from the routing table that the destination object locator is comprised in the logical partition that is reachable by the identified neighbouring node.

In order to maintain the routing table, the routing module runs a discovery procedure to discover near-optimal segments. This discovery procedure is driven by the value of k which determines the standard vertex distance metric to be covered from each networking node $x \in V(G)$ such that x can discover the segments located in its neighborhood as defined by the ball $B(x, k)$ of radius $k$ centered at node x. For this purpose, each vertex explores its local neighbourhood to detect the so-called k-local geodesics $\gamma.d(\gamma(s), \gamma(t)) = |s\text{-}t|, \forall s,t \in [a, b]$ with $|s - t| \leq k$. This way, the calculated routing paths are comprised within the limits of k-local geodesic. This follows the Theorem III.H.1.13 as disclosed in the publication "Metric Spaces of Non-Positive Curvature" by M. Bridson and A. Haefliger in volume 319 of Comprehensive Surveys in Mathematics, Springer-Verlag, Berlin, 1999. In there, it is disclosed that k-local geodesics correspond to quasi-geodesic segments if the metric space $(X, d)$ defines a negatively curved d-hyperbolic geodesic metric space. Thus, provided that the negatively curvature condition is locally verified for each ball $B(x, k)$ centered at each node x, which is provably the case for graphs quasi-isometric to trees, the identification of k-local geodesics leads to the enumeration of quasi-geodesic segments. It is also desirable that the deviation between the geodesic $\gamma_{uv}$ and the $(\lambda, \varepsilon)$-quasi-geodesic $\gamma'_{uv}$ joining the same end points u, $v$ of the hyperbolic geodesic space remains as close as possible. The latter follows from the $\delta$-hy-

perbolic property of the graph underlying the Internet topology for which the deviation $d\left(\gamma_{uv}, \gamma'_{uv}\right)$ is the smallest. From the routing perspective, the major advantage is that in absence of the optimal geodesic path towards the destination object locator, an alternative near-optimal path corresponding to a local optimum can always be found provided that the edges of the graph are properly weighted. For example by the hyperbolic distance or an information which enables to derive it, such as the transit delay, and that the deviation of near-optimal paths from the corresponding optimal path is provably limited. A further advantage is that the stability property of quasi-geodesics implies that the routing decisions are robust and offer the possibility to consider the alternate (quasi-)geodesic path(s) to ensure resilience of destination reachability.

Finally, in order to dynamically populate its routing tables, a routing module 215 and thus vertex $u \in V(G)$ waits for changes of local link weight $\omega(u,x)$ from $u$ to neighbor x or for messages from its neighbors x translating changes in their own distance vector in order to update its own vector: $\forall \, v \in V: d_H(u;v) \leftarrow min_x\{\omega(u, x) + (d_G(x, v) = \ell(x,v)) | \, d_G(u,v) \leq k\}$. Thus, only information from nodes within the number k of hops from the networking node is used. In order to apply this principle also to the surroundings nodes, the routing module 215 may further propagate the updates only within k hops from the source networking node that initiated the update.

Example

The main advantage of the above embodiments are further illustrated by an example elaborated in this section with reference to Fig. 1. According to this example the networking node 110 also referred to as requester r is associated with coordinate x as object locator. Requester r queries for a given data object and issues a request following the process illustrated in step 301 of Fig. 3. In reply, requester r receives object locator and thus coordinate y1 which is associated to the server networking node 101 further referred to as server s1.

In the network topology the path along nodes 110-107-101, which is the path with the minimum hop-count distance $d_G(r,s1)$, is not the path with the shortest hyperbolic distance $d_H(r,s1)$. The path with the shortest hyperbolic distance is the path along nodes 110-106-105-104-103-102-101. Therefore, the routing module of requester r will identify the latter path as the shortest path to server s1 and thus issue a message to server s1 by sending the message to neighbouring node 106.

In an alternative scenario, a data copy of the object can be (temporarily or not) available at multiple servers nodes 101 and 104. In this case, node 110 receives a response in step 302 including multiple data object locators, i.e., the coordinates set {y1,y4}. For each coordinate pairs of this set, node 110 calculates the hyperbolic distance $d_H$ to the server 101 or s1 ($d_H(x,y1)$) and to the server 104 or s4 ($d_H(x,y4)$) according to step 303 in Fig. 3. Then, node 110 selects the nearest server from where that data object is accessible, i.e. server 104 in this case. Node 110 thus obtains a different outcome that when it would be using the hop count distance $d_G$ for selecting the server. In other words, the selection of the closest (or nearest) server differs between using the metric graph X and the topology graph V(G). It is further ensured that if the geodesic path (r,s4) exists then the selection of node 110 can be directed toward s4 along that path. If not, then node 110 selects s1 along the quasi-geodesic path to server s1 whose distance $d'_H(r,s_1) \geq 2\delta$ and differs from the geodesic trajectory $d_H(r,s1)$ by $\left| d'_H(r,s_1) - d_H(r,s_1) \right| \leq 2\delta' + 1.$

Results

The table below compares the asymptotic upper bounds of the performance metrics characterizing the routing according to the above embodiments with information routing systems based on the Border Gateway Protocol or BGP or, more generally, the path-vector routing algorithm. The latter relies on the exchange of content locators taken out of the IP address space. One can observe a factor gain of n (number of nodes) in the memory space required to store routing information and a factor gain of $\sqrt{n}$ in the memory space required to store routing tables while limiting the routing path stretch increase to a small additional constant characterizing the geometric property of the topology at the detriment of an additive-stretch increase.

| Performance metric | Geometric Routing | Path Vector Routing |
|---|---|---|
| Stretch | $(1, \delta. h. (k - 1))$-additive stretch | 1 (without policing) |
| Memory space complexity | Input: $O(\sqrt{n(n-1)}. \log(n))$ Output: $(\sqrt{n}. \log(n))$ | Input: $O(\Delta(G).(n-1). n.\log(n))$ Output: $O(\Delta(G). (n-1).n.\log(n))$ |
| Communication complexity | Bit-message: $O(m. \sqrt{n})$ Time: $O(\delta. h. (k-1))$ | Bit-message: $O(n.(n-1))$ Time: $O(\Delta(G))$ (without policing) |

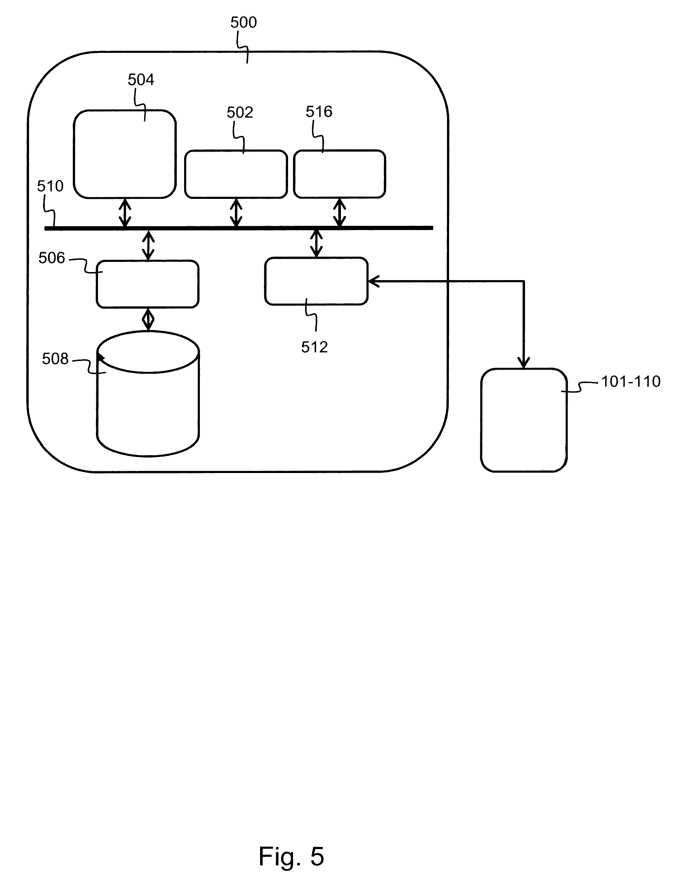

Fig. 5 shows a suitable computing system 500 as a further embodiment of a networking node. Computing system 500 may in general be formed as a suitable general purpose computer and comprise a bus 510, a processor 502, a local memory 504, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Communication interface 512 may comprise any transceiver-like mechanism such as for example one or more Ethernet interfaces that enables computing system 500 to communicate with other devices and/or systems such as other networking nodes in the communication network 100. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, or other storage support could be used. The system 500 described above can also run as a Virtual Machine above the physical hardware.

The steps illustrated by the above embodiments may be implemented as programming instructions stored in local memory 504 of the computing system 500 for execution by its processor 502. Alternatively the instructions may be stored on the storage element 508 or be accessible from another computing system through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Networking node (200, 101-110) for exchanging messages in a communication network (100); said networking node comprising a message exchange module (201) configured to exchange said messages based on object locators of objects (200, 101-110) within said communication network; and wherein an object locator comprises geometric coordinates of a respective object in a negatively curved hyperbolic space; and wherein a distance between objects in said negatively curved hyperbolic space relate to a travel time of messages exchanged between said objects.

2. Networking node according to claim 1 wherein said travel time is a Round Trip Time or RTT.

3. Networking node according to claim 1 wherein said message exchange module further comprises:

   - a locator retrieval module (211) configured to receive a request for a data object; and to request (301) and retrieve (302) object locators for said data object;
   - a localization module (212) configured to calculate (303) distances in said negatively curved hyperbolic space between a geometric coordinate of said networking node and geometric coordinates of said retrieved object locators; and
   - a decision module (213) configured to select (304) a selected data object locator from said retrieved object locators based on said distances; and to retrieve (305) said data object from a server node in said communication network by said selected data object locator.

4. Networking node according to claim 1 wherein said message exchange module further comprises:

   - a routing table (214) comprising entries pointing to coordinate sets indicative for logical partitions of said negatively curved hyperbolic metric space; and wherein said entries relate to quasi-geodesic and geodesic segments in said hyperbolic metric space; and wherein lengths of said segments correspond to said distances in said hyperbolic metric space;
   - a routing module (215) for calculating routing paths from said entries and routing incoming messages to neighbouring networking nodes according to said routing paths.

5. Networking node according to claim 4 wherein information for computing said calculated routing paths are comprised within the limits of k-local geodesics.

6. Networking node according to claim 4 wherein said routing module is further adapted to receive updates on said segment lengths from neighbouring networking nodes and to update said routing table accordingly.

7. Networking node according to claim 6 wherein said routing module is further adapted to propagate said updates within a predetermined number of hops k from a source networking node that initiated said updates.

8. Networking node according to claim 1 wherein said message exchange module further comprises:

- an object locator determining module (216) configured to determine an object locator of an object in said communication network by deriving (404, 408) geometric coordinates of said object in said negatively curved hyperbolic space from travel times of messages exchanged (402, 405) between said object and neighbouring networking nodes.

9. Networking node according to claim 8 wherein said object locator determining module is further configured to:

- update (404) a geometric coordinate of said networking node by using:

o a received geometric coordinate of a 1-hop neighbouring networking node;
o a received travel time to said 1-hop neighbouring networking nodes;
o a received relative error in said received geometric coordinate of said 1-hop neighbouring networking node;

- or, when said received geometric coordinate of said 1-hop neighbouring networking node is zero, update (408) said geometric coordinate of said networking node by using:

o a received geometric coordinate of a farther neighbouring networking node reachable by said 1-hop neighbouring networking node;
o a received travel time to said farther neighbouring networking node;
o a received relative error in said geometric coordinate of said farther neighbouring networking node;

- repeat said updating for all 1-hop neighbouring networking nodes.

10. A method for exchanging messages in a communication network comprising;

- exchanging said messages based on object locators of objects within said communication network; and wherein an object locator comprises geometric coordinates of a respective object in a negatively curved hyperbolic space; and wherein a distance between objects in said negatively curved hyperbolic space relate to a travel time of messages exchanged between said objects.

11. A computer program product comprising computer-executable instructions for performing the method according to claim 10 when the program is run on a computer.

12. A computer readable storage medium comprising the computer program product according to claim 11.

13. A data processing system programmed for carrying out the method according to claim 10.

Fig. 1

Fig. 2

REQUEST DATA OBJECT LOCATOR — 301

RECEIVE SET OF DATA OBJECT LOCATORS — 302

CALCULATE HYPERBOLIC DISTANCES — 303

SELECT DATA OBJECT LOCATOR WITH SHORTEST DISTANCE — 304

REQUEST DATA OBJECT FROM SELECTED LOCATION — 305

Fig. 3

Fig. 4

Fig. 5

Europäisches
Patentamt

European
Patent Office

Office européen
des brevets

# EUROPEAN SEARCH REPORT

Application Number

EP 15 29 0171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YONGQUAN FU ET AL: "HyperSpring: Accurate and Stable Latency Estimation in the Hyperbolic Space", PARALLEL AND DISTRIBUTED SYSTEMS (ICPADS), 2009 15TH INTERNATIONAL CONFERENCE ON, IEEE, PISCATAWAY, NJ, USA, 8 December 2009 (2009-12-08), pages 864-869, XP031617020, ISBN: 978-1-4244-5788-5 | 1,2,4-13 | INV.<br>H04L12/733<br>H04L12/721 |
| Y | * page 864, left-hand column, line 21 - page 865, right-hand column, line 45 * | 3 | |
| Y | WO 2010/025094 A1 (NTT DOCOMO INC [JP]; WESTPHAL CEDRIC [US]; PEI GUANHONG [US]) 4 March 2010 (2010-03-04) * the whole document * | 3 | |

-----

-----

**TECHNICAL FIELDS SEARCHED (IPC)**

H04L

The present search report has been drawn up for all claims

| Place of search | Date of completion of the search | Examiner |
|---|---|---|
| The Hague | 29 January 2016 | Perrier, Samuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                  

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 29 0171

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2016

| Patent document cited in search report | Publication date | Patent family member(s) | Publication date |
|---|---|---|---|
| WO 2010025094 A1 | 04-03-2010 | US 2010290480 A1<br>WO 2010025094 A1 | 18-11-2010<br>04-03-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A data-oriented (and beyond) network architecture. **T.KOPONEN.** the Proc. of 2007 Conference on Applications, Technologies, Architectures, and Protocols for Computer Communications. ACM SIG-COMM, 2007, 181-192
- **V.JACOBSON ; D.K.SMETTERS ; J.D.THORNTON ; M.F.PLASS ; N.H.BRIGGS ; R.L.BRAYNARD.** Networking named content. *Proceedings of CoNEXT,* 2009
- **D.KRIOUKOV et al.** Efficient Navigation in Scale-Free Networks Embedded in Hyperbolic Metric Spaces. *Efficient Navigation in Scale-Free Networks Embedded in Hyperbolic Metric Spaces,* May 2008
- **F.PAPADOPOULOS et al.** Greedy forwarding in dynamic scale-free networks embedded in hyperbolic metric spaces. *Proc. of 29th IEEE Conference on Computer Communications (INFOCOM),* 2010, 1-9
- **FRANK DABEK ; RUSS COX ; FRANS KAASHOEK ; ROBERT MORRIS.** Vivaldi: A Decentralized Network Coordinate System. *ACM SIG-COMM'04,* 30 August 2004
- Metric Spaces of Non-Positive Curvature. **M. BRIDSON ; A. HAEFLIGER.** Comprehensive Surveys in Mathematics. Springer-Verlag, 1999, vol. 319